# EUROPÄISCHE PATENTSCHRIFT

(11) **EP 0 583 741 B1**
(45) Veröffentlichungstag und Bekanntmachung des Hinweises auf die Patenterteilung: **04.06.1997**
(21) Anmeldenummer: 93112931.6
(22) Anmeldetag: 12.08.1993
(51) Int. Cl.: G11B 15/20, G11B 15/44

(54) **Diktiergerät mit kombinierter Kurzrücklauf-Rücklauffunktion**
Dictation apparatus with combined function short and fast rewind
Appareil à dicter avec fonction combinée de rembobinage court et rapide

(30) Priorität: 14.08.1992 DE 4227025
(43) Veröffentlichungstag der Anmeldung: 23.02.1994
(73) Patentinhaber: Grundig E.M.V. Elektro-Mechanische Versuchsanstalt Max Grundig GmbH & Co. KG, 90762 Fürth (DE)
(72) Erfinder: Keller, Klaus, GRUNDIG E.M.V., D-90748 Fürth (DE)

(56) Entgegenhaltungen:
- DE-A- 2 633 761
- DE-A- 3 536 504
- DE-A- 3 737 956
- DE-A- 4 142 086
- DE-C- 3 018 405
- DE-C- 3 743 839
- GB-A- 2 209 090

## Beschreibung

Die Erfindung betrifft ein Diktiergerät, insbesondere Handdiktiergerät, nach dem Oberbegriff des Anspruchs 1.

Bei Diktiergeräten ist es üblich und notwendig, nach Unterbrechung des Diktats oder der Wiedergabe, in eine Rücklauffunktion zu schalten, um das zuletzt Aufgezeichnete oder Wiedergegebene noch einmal hören zu können. Das kurze Rücksetzen des Magnetbandes kann in der Art erfolgen, daß die Rücklauffunktion nur kurz gestartet und, nach dem Gefühl des Gerätebenutzers, wieder unterbrochen wird, wobei die zurückgesetzte Diktatlänge sehr stark variiert. Wesentlich gleichmäßiger ist die zurückgesetzte Diktatlänge, wenn ein zeitlich begrenzter Kurzrücklauf erfolgt. Damit wird, zumindest auf eine bestimmte Bandstelle bezogen, die rückgespulte Magnetbandlänge immer gleich lang sein.

Diktiergeräte mit Kurzrücklauf-Einrichtungen sind bekannt.

In der DE-A1-35 36 504 wird eine Kurzrücklaufschaltung für ein Diktiergerät beschrieben. Durch eine Schalteinrichtung kann der Kurzrücklauf gestartet werden. Ein an eine Spannungsquelle angeschlossenes RC-Serienglied bestimmt dabei die Kurzrücklaufzeit. Der Kondensator des RC-Seriengliedes wird bei nicht gestartetem Kurzrücklauf von einem Mikroprozessor kurzgeschlossen. Bei gestartetem Kurzrücklauf wird die sich am Kondensator aufbauende Spannung überwacht. Bei Erreichung eines Schwellwertes wird der Kurzrücklauf beendet. Die Kurzrücklaufzeit kann individuell am Widerstand des RC-Seriengliedes eingestellt werden.

Eine weitere Einrichtung zum Rücksetzen des Magnetbandes wird bei einem Wiedergabe-Bandgerät in DE-C2-30 18 405 beschrieben. Diese Einrichtung bewirkt, daß jedesmal, wenn von Wiedergabe in Stopp geschaltet wird, das Magnetband um eine bestimmte Länge zurückgespult wird. Weil bei Diktaten oft Passagen nicht deutlich verstanden werden, soll damit, wenn von Stopp wieder auf Wiedergabe geschaltet wird, automatisch immer das zuletzt Gehörte wiederholt werden. Die zurückgesetzte Bandlänge ist variabel und einstellbar. Damit, unabhängig von der Bandverteilung in der Kassette, immer die gleiche Magnetbandlänge zurückgesetzt wird, wird in die Steuerung der Rücklaufzeit der Durchmesser des abwickelnden Wickels mit einbezogen. Durch eine Detektor-Einrichtung wird ein Signal erzeugt, das den Bandrollendurchmesser der abgetasteten Spule charakterisiert.

Als vorbekannt ist noch ein Diktiergerät mit Kurzrücklauf-Funktion zu nennen, das in DE-C2- 37 43 839 offenbart wird. Dort wird davon ausgegangen, daß von dem Moment des Schaltens auf Kurzrücklauf bis zum Beginn der Bandbewegung eine gewisse Zeit vergeht, die, je nach Zustand der dabei betätigten Schwenkmechanik, kurz oder lang sein kann. Die Kurzrücklaufzeit ist einstellbar. Ist nun die genannte Schwenkmechanik schwergängig, wird die Schwenkzeit groß sein und die verbleibende Rest-Kurzrücklaufzeit klein. Bei leichtgängiger Schwenkmechanik wird die Rest-Kurzrücklaufzeit entsprechend länger, aber immer noch kürzer, als die am Diktiergerät eingestellte. Um diese variable Schwenkzeit zu eliminieren, ist eine Zeitmeßeinrichtung eingerichtet, die die Zeit vom Einleiten des Kurzrücklaufs bis zum Beginn der Bandbewegung mißt und diese zur eingestellten Kurzrücklaufzeit addiert. Damit findet während der vorgewählten Kurzrücklaufzeit tatsächlich die gewünschte Bandbewegung statt.

Dieser unbestreitbare Komfort einer Bandrücksetzung muß allerdings mit einem erheblichen Aufwand erkauft werden. Für Diktiergeräte, die unter wirtschaftlichen Gesichtspunkten hergestellt werden müssen, ist dieser relativ hohe Aufwand nicht gerechtfertigt.

Bei den drei aufgeführten Geräten bzw. Einrichtungen nach dem Stand der Technik ist weiterhin von Nachteil, daß das Rücksetzen des Magnetbandes immer nur in Kurzrücklauffunktion erfolgt. Ein Zurückspulen einer größeren Magnetbandlänge oder des gesamten Magnetbandes ist nur möglich durch Betätigung einer gesonderten Umspultaste oder, wenn die Kurzrücklaufzeit soweit vergrößert werden kann, daß bis zu ihrem Ablauf die gewünschte Magnetbandlänge zurückgespult ist. Damit ist aber ein gezieltes, kurzes Rückspulen nicht mehr möglich.

Aufgabe der Erfindung ist es, bei einem Diktiergerät eine Einrichtung zu schaffen, die sowohl Kurzrücklauf (Kurzvorlauf) als auch, ohne zusätzlichen Bedienaufwand, Rücklauf (Vorlauf) des Magnetbandes in beliebiger Länge ermöglicht. Der Aufwand für diese Einrichtung soll gering gehalten werden.

Diese Aufgabe wird durch ein Diktiergerät nach dem des Anspruch 1 oder 2 gelöst. Die Unteransprüche geben vorteilhafte Ausgestaltungen der Erfindung an.

In den Ansprüchen 3 und 4 wird vorgeschlagen, die Zeiten T1 und T2 geräteseitig in einer bestimmten Größe bereits festzulegen. Damit kann der notwendige Aufwand für die zeitgesteuerte Einrichtung auf einem Minimum gehalten werden, weil weder ein einstellbares Zeitglied, noch eine Bedieneinrichtung für das Einstellen eines Zeitgliedes benötigt werden.

Der Anspruch 5 läßt eine etwas aufwendigere Lösung zu, bei der zur Erzielung eines gewissen Komforts ein etwas größerer zusätzlicher Aufwand betrieben werden muß.

Bei der erfindungsgemäßen Lösung wird nach Einschalten des Rücklaufs der Motor zunächst in seiner Rücklaufrichtung für eine Zeit T1 angetrieben. Unter der Annahme, daß die Bandgeschwindigkeit beim Rückspulen etwa 20 mal höher ist als bei Wiedergabebetrieb, hat sich eine Motorlaufzeit von 100 ms als zweckmäßig erwiesen. Es wird im Durchschnitt in dieser Zeit eine Bandlänge zurückgespult, die etwa 2 sec Wiedergabebetrieb entspricht. Erfahrungsgemäß ist dies in der Praxis ein durchaus gängiger Wert, mit dem man die notwendigen Wiederholpassagen erreicht. Nach Ablauf von T1 wird der Motor für die Zeit T2 stromlos gesetzt. In dieser Zeit kann der Gerätebenutzer entscheiden, ob er wieder in den Wiedergabebetrieb gehen, oder das Magnetband weiter zurückspulen will. Entscheidet er sich für das letztere, wird das Magnetband nun im Rücklaufbetrieb transportiert, bis die Rücklauffunktion beendet wird, bzw. der Bandanfang erreicht ist. Soll nach dem ersten Zurücksetzen des Magnetbandes nach T1 ein weiteres oder öfteres kurzes Zurücksetzen gewünscht werden, so kann das Rücklauf-Bedienelement wieder kurz in die Wiedergaberichtung und sofort wieder in die Rücklaufrichtung geschaltet werden. Jedesmal, wenn dieser Schaltvorgang wiederholt wird, wird eine Bandlänge zurückgesetzt, die ca. 2 sec Wiedergabebetrieb entspricht.

Als praxisnah und zweckmäßig hat sich bei der erfindungsgemäßen Lösung eine Stillstandszeit des Motors von T2 = 400 ms erwiesen. In dieser Zeit kann der Gerätebenutzer entscheiden, ob er anschließend in Wiedergabebetrieb gehen, das Magnetband weiter zurückspulen, oder den Kurzrücklauf wiederholen will. Andererseits hat diese kurze Stoppzeit von 400 ms kaum einen Einfluß auf die Umspulzeit des Magnetbandes, wenn sich der Gerätebenutzer für Rücklauf entschieden hat.

Durch die hier festgelegten Zeiten von T1 und T2 kann der für Kurzrücklauf und Rücklauf benötigte geräteseitige Aufwand sehr gering gehalten werden, ohne einen gewissen Diktier-Komfort vermissen zu lassen.

Mit einem etwas größeren Aufwand kann die Einrichtung mit einstellbaren Zeitgliedern versehen werden, um die Zeiten T1 und T2 individuell einstellen zu können.

Die hier beschriebene Erfindung bezieht sich auf eine Kurzrücklauf- und Rücklauffunktion. Die Einrichtung kann selbstverständlich so ausgestaltet werden, daß sowohl Kurzrücklauf/Rücklauf, als auch Kurzvorlauf/Vorlauf realisiert werden kann.

Verschiedene Gerätefunktionen mit ein und dem selben Bedien- oder Schaltelement zu realisieren, ist bereits bekannt. In der DE-A1-41 42 086 wird ein Tastensteuerverfahren und eine Steuervorrichtung für einen Kassettenrecorder beschrieben. Dieser Kassettenrecorder weist gabetasteneinrichtungen auf, die eine oder mehrere Tasten besitzen. Dabei ist jede Taste in der Lage, eine Vielzahl von Funktionen darzustellen, die zur Durchführung vom Benutzer wählbar sind. Steuereinrichtungen erzeugen ein Steuersignal in Abhängigkeit von mindestens einer der vom Benutzer gewählten Funktionen, und der Recorder führt die gewählte Funktion in Abhängigkeit vom Steuersignal aus. Bei den dort verwendeten Tasten handelt es sich um rein elektrische Tasten, d.h es wird lediglich ein Stromkreis geschlossen oder geöffnet, oder Schaltimpulse erzeugt. Die eigentliche Steuerung des beschriebenen Recorders erfolgt durch die oben erwähnte aufwendige Steuereinrichtung.

Anders ist dies beim erfindungsgemäßen Diktiergerät. Dort wird durch die Betätigung eines Schaltelementes das Gerät rein mechanisch in die Rücklaufstellung gebracht. Das ist in jedem Fall notwendig, egal ob eine Kurzrücklauf- oder Rücklauffunktion gewünscht wird, da beide Funktionen eine gleiche Getriebestellung benötigen. Eine weitere Funktion ist dabei nicht mehr möglich oder notwendig, weil Kurzrücklauf und Rücklauf des Bandes von der Bewegung des Bandes her keine unterschiedlichen Funktionen erfordern. Die Realisierung von Kurzrücklauf und anschließendem Rücklauf, oder nur Kurzrücklauf, erfolgt denkbar einfach, nur durch Laufenlassen oder Stillsetzen des Motors. Eine aufwendige Steuereinrichtung zum Ausführen von verschiedenen Funktionen, wie bei dem Gegenstand nach DE-A1-41 42 086, ist dazu nicht notwendig.

## Patentansprüche

1. Diktiergerät mit kombinierter Kurzrücklauf-Rücklauffunktion, insbesondere Handdiktiergerät, mit einem in einem Kassettengehäuse befindlichen bandförmigen Speichermedium und einem Laufwerk mit einem Motor, sowie einer Einrichtung zur Steuerung von Start und Rücklauf, und einer Zeitmeßeinrichtung, die die vom Einschalten des Rücklaufs an laufende Zeit mißt,
**dadurch gekennzeichnet**, daß
- nur ein Schaltelement vorhanden ist, durch dessen Betätigung die beiden Funktionen Kurzrücklauf und Rücklauf mechanisch realisierbar sind,
- der Motor des Gerätes während des Kurzrücklaufs für eine Zeit T1 läuft, wodurch eine Kurzrücklauffunktion realisiert wird, anschließend für eine Zeit T2 stillsteht und danach bei noch andauernder Betätigung des Schaltelementes, bis zu deren Beendigung wieder läuft, wodurch eine Rücklauffunktion realisiert wird, und
- der Motor des Geräts während des Kurzrücklaufs für eine Zeit T1 läuft, danach stillsteht und das Gerät in einen Wiedergabemodus übergeht, wenn innerhalb der Zeit T2 die Betätigung des genannten Schaltelementes aufgehoben wird.

2. Diktiergerät mit kombinierter Kurzvorlauf-Vorlauffunktion, insbesondere Handdiktiergerät, mit einem in einem Kassettengehäuse befindlichen bandförmigen Speichermedium und einem Laufwerk mit einem Motor, sowie einer Einrichtung zur Steuerung von Start und Vorlauf, und einer Zeitmeßeinrichtung, die die vom Einschalten des Vorlaufs an laufende Zeit mißt,
**dadurch gekennzeichnet**, daß
- nur ein Schaltelement vorhanden ist, durch dessen Betätigung die beiden Funktionen Kurzvorlauf und Vorlauf realisierbar sind,
- der Motor des Gerätes während des Kurzvorlaufs für eine Zeit T1 läuft, wodurch eine Kurzvorlauffunktion realisiert wird, anschließend für eine Zeit T2 stillsteht und danach bei noch andauernder Betätigung des Schaltelementes, bis zu deren Beendigung wieder läuft, wodurch eine Vorlauffunktion realisiert wird, und
- der Motor des Geräts während des Kurzvorlaufs für eine Zeit T1 läuft, danach stillsteht und das Gerät in einen Wiedergabemodus übergeht, wenn innerhalb der Zeit T2 die Betätigung des genannten Schaltelementes aufgehoben wird.

3. Diktiergerät nach Anspruch 1 oder 2,
**dadurch gekennzeichnet**, daß
die Zeiten T1 und T2 geräteseitig fest vorgegeben sind.

4. Diktiergerät nach Anspruch 1 oder 2,
**dadurch gekennzeichnet**, daß
die Zeiten T1 = 100 ms und T2 = 400 ms betragen.

5. Diktiergerät nach Anspruch 1 oder 2,
**dadurch gekennzeichnet**, daß
eine Einrichtung vorhanden ist, mit der die Zeiten T1 und T2 individuell am Diktiergerät einstellbar sind.

## Claims

1. Dictation machine having combined short rewind/rewind function, in particular hand-held dictation machine, having a tape-type storage medium disposed in a cassette housing and a tape transport mechanism with a motor, and also comprising a device for controlling start and rewind and a time-measuring device which measures the time which has elapsed from switching on the rewind, characterized in that
- only one switching element is present, through whose actuation the two functions of short rewind and rewind can be implemented mechanically,
- the motor of the appliance runs for a time T1 during the short rewind, as a result of which a short rewind function is achieved, is then stationary for a time T2 and after that, if actuation of the switching element is still continued, runs again until the latter is terminated, as a result of which a rewind function is achieved, and
- the motor of the appliance runs during the short rewind for a time T1, is then stationary and the appliance goes over to a playback mode if the actuation of the said switching element is cancelled within the time T2.

2. Dictation machine having combined short forward wind/forward wind function, in particular hand-held dictation machine, comprising a tape-type storage medium disposed in a cassette housing and a tape transport mechanism with a motor, and also comprising a device for controlling start and forward wind and a time-measuring device which measures the time which has elapsed from switching on the forward wind onwards, characterized in that
- only one switching element is present, through whose actuation the two functions of short forward wind and forward wind can be implemented,
- the motor of the appliance runs for a time T1 during the short forward wind, as a result of which a short forward wind function is achieved, is then stationary for a time T2 and after that, if actuation of the switching element is still continued, runs until the latter is terminated, as a result of which a forward wind function is achieved, and
- the motor of the appliance runs for a time T1 during the short forward wind, is then stationary and the appliance goes over to a playback mode if the actuation of the said switching element is cancelled within the time T2.

3. Dictation machine according to Claim 1 or 2,
characterized in that the times T1 and T2 are fixed on the appliance side.

4. Dictation machine according to Claim 1 or 2,
characterized in that the times T1 = 100 ms and T2 = 400 ms.

5. Dictation machine according to Claim 1 or 2,
characterized in that a device is present with which the times T1 and T2 can be individually set in the dictating machine.

## Revendications

1. Appareil à dicter ayant une fonction combinée de rembobinage court - rembobinage, notamment appareil à dicter à actionnement manuel, comportant un support de mémoire en forme de bande situé dans un boîtier de cassette, et une unité d'enroulement équipée d'un moteur, ainsi qu'un dispositif pour commander le démarrage et le rembobinage, et un dispositif de chronométrage, qui mesure le temps qui s'écoule à partir du déclenchement du rembobinage, caractérisé en ce que
- il est prévu seulement un élément de commutation, dont l'actionnement permet de réaliser mécaniquement les deux fonctions rembobinage court et rembobinage,
- le moteur de l'appareil fonctionne pendant le rembobinage court pendant un intervalle de temps T1, ce qui permet de réaliser une fonction de rembobinage court, puis s'arrête pendant un intervalle de temps T2 et ensuite, alors que l'actionnement de l'élément de commutation est encore en cours, fonctionne à nouveau jusqu'à la fin de cet actionnement, ce qui réalise une fonction de rembobinage, et
- le moteur de l'appareil fonctionne, pendant le rembobinage court, pendant un intervalle de temps T1, puis s'arrête et l'appareil passe à un mode de reproduction, lorsqu'au cours de l'intervalle de temps T2, l'actionnement dudit élément de commutation est interrompu.

2. Appareil à dicter ayant une fonction combinée d'avance courte - avance, notamment appareil à dicter à actionnement manuel, comportant un support de mémoire en forme de bande situé dans un boîtier de cassette, et une unité d'enroulement équipée d'un moteur, ainsi qu'un dispositif pour commander le démarrage et l'avance, et un dispositif de chronométrage, qui mesure le temps qui s'écoule à partir du déclenchement de l'avance, caractérisé en ce que
- il est prévu seulement un élément de commutation, dont l'actionnement permet de réaliser les deux fonctions avance courte et avance,
- le moteur de l'appareil fonctionne pendant l'avance courte pendant un intervalle de temps T1, ce qui permet de réaliser une fonction d'avance courte, puis s'arrête pendant un intervalle de temps T2 et ensuite, alors que l'actionnement de l'élément de commutation est encore en cours, fonctionne à nouveau jusqu'à la fin de cet actionnement, ce qui réalise une fonction d'avance, et
- le moteur de l'appareil fonctionne, pendant l'avance courte, pendant un intervalle de temps T1, puis s'arrête et l'appareil passe à un mode de reproduction, lorsqu'au cours de l'intervalle de temps T2, l'actionnement dudit élément de commutation est interrompu.

3. Appareil à dicter selon la revendication 1 ou 2, caractérisé en ce que les intervalles de temps Tl et T2 sont prédéterminés de façon fixe dans l'appareil.

4. Appareil à dicter selon la revendication 1 ou 2, caractérisé en ce que les intervalles de temps ont pour valeurs T1 = 100 ms et T2 = 400 ms.

5. Appareil à dicter selon la revendication 1 ou 2, caractérisé en ce qu'il est prévu un dispositif à l'aide duquel les intervalles de temps T1 et T2 sont réglables individuellement dans l'appareil à dicter.
